# EUROPEAN PATENT APPLICATION

(11) **EP 2 680 467 A2**
(43) Date of publication of application: **01.01.2014**
(21) Application number: 13003063.8
(22) Date of filing: 14.06.2013
(51) Int. Cl.: H04J 3/06

(54) **Multichip sychronization system**

(30) Priority: 27.06.2012 US 201213535099
(71) Applicant: Broadcom Corporation, Irvine, CA 92617 (US)
(72) Inventor: Kammaje, Ravishankar, Fremont, CA 94555 (US)
(74) Representative: Jehle, Volker Armin

(57) **Abstract**

A multichip synchronization system may include a master chip communicatively coupled to at least one slave chip. The master chip and the slave chip may each include data lanes, memories, and a counter that increments at each clock cycle. The master chip may align its data lanes and, upon completion thereof, may buffer the data lanes into its memories, transmit a synchronization signal to the slave chip, and initiate its counter. The master chip may release its memories when the counter reaches a synchronization window value. The slave chip may align its data lanes and, upon completion thereof, may buffer the data lanes into its memories. The slave chip may initiate its counter upon reception of the synchronization signal from the master chip, and may release its memories when the counter reaches the synchronization window value.

## Description

### TECHNICAL FIELD

The present description relates generally to synchronization, and more particularly, but not exclusively, to a multichip synchronization system.

### BACKGROUND

In a wireless communications device, an analog signal received by an antenna may be converted into a digital signal, such as by an analog to digital converter (ADC), and the digital signal may be provided to a digital front end (DFE) chip. The DFE chip may process the digital signal, such as by performing downconversion processing, crest factor reduction processing, digital predistortion processing, etc. In some instances, a DFE chip may include multiple data lanes, e.g. multiple data lanes across which the output of the ADC may be multiplexed. The DFE chip may internally align the data lanes such that the data stream output by the DFE chip is properly aligned. Thus, for wireless communication devices that include only one receive antenna, e.g. devices that receive only one analog signal, the data stream output by the DFE chip will be properly aligned, even in instances where the DFE chip includes multiple data lanes.

However, a wireless communication device that includes multiple receive antennas over which multiple analog signals are received, such as a multiple-input and multiple-output (MIMO) wireless communication device, may also include multiple DFE chips, e.g. the device may include at least one DFE chip corresponding to each receive antenna. As previously discussed, the individual DFE chips may each include multiple data lanes that are internally aligned by the individual DFE chips to ensure that the data streams output by the individual DFE chips are properly aligned. However, there may be no assurance that the digital signals processed by each DFE chip are aligned with one another, e.g. the corresponding received analog signals may experience different interferences during transmission and therefore may not be aligned. Accordingly, although each individual DFE chip may be able to internally align its own data lanes, there may be no assurance that the data lanes are aligned across all of the DFE chips, which may be necessary to properly process the received signals in a MIMO wireless communication device. Thus, for a MIMO wireless communication device that includes multiple DFE chips it may be necessary to synchronize the DFE chips with one another, such that the data streams output by the DFE chips are aligned with one another, e.g. phase aligned.

### BRIEF SUMMARY OF THE INVENTION

According to an aspect, a method for multichip synchronization comprises:
aligning, by each of a plurality of chips, a plurality of data lanes of each of the plurality of chips, wherein the plurality of chips comprises a master chip and a plurality of slave chips;
upon completing the aligning by each of the plurality of chips:
   buffering, by each of the plurality of chips, each of the plurality of data lanes of each of the plurality of chips in a plurality of memories of each of the plurality of chips;
      and
   initiating, by each of the plurality of chips, a first counter that increments at each clock cycle;
transmitting, from the master chip of the plurality of chips to the plurality of slave chips of the plurality of chips, a synchronization signal upon completing the aligning by the master chip of the plurality of chips;
initiating, by each of the plurality of chips, a second counter that increments at the each clock cycle, wherein the second counter of each of the plurality of slave chips of the plurality of chips is initiated when the synchronization signal is received by each of the plurality of slave chips of the plurality of chips irrespective of whether each of the plurality of slave chips of the plurality of chips completed the aligning, and the second counter of the master chip of the plurality of chips is initiated when the synchronization signal is transmitted by the master chip of the plurality of chips; and
releasing, by each of the plurality of chips, the plurality of memories of each of the plurality of chips when the second counter of each of the plurality of chips reaches a synchronization window value of each of the plurality of chips.

Advantageously, the completing the aligning by each of the plurality of chips is determined based on an inter-lane alignment complete signal generated by each of the plurality of chips or based on processing an alignment character by each of the plurality of chips.

Advantageously, the method further comprises:
generating an error signal when the first counter of any of the plurality of slave chips of the plurality of chips reaches a timeout value before receiving the synchronization signal from the master chip of the plurality of chips, wherein the timeout value is equivalent to the synchronization window value.

Advantageously, the method further comprises:
generating an error signal when any of the plurality of slave chips of the plurality of chips has not completed the aligning prior to the second counter reaching the synchronization window value.

Advantageously, the synchronization window value of at least one of the plurality of chips is different than at least one other of the plurality of chips.

Advantageously, the master chip of the plurality of chips completes the aligning prior to at least one of the plurality of slave chips of the plurality of chips.

Advantageously, the master chip of the plurality of chips completes the aligning after at least one of the plurality of slave chips of the plurality of chips.

According to an aspect, a multichip synchronization system comprises:
a master chip communicatively coupled to at least one slave chip, the master chip comprising a first plurality of data lanes, a first plurality of memories, and a first counter that increments at each clock cycle, wherein the master chip is operative to:
   align the first plurality of data lanes;
   upon completion of the alignment of the first plurality of data lanes:
      buffer the first plurality of data lanes into the first plurality of memories,
      transmit a synchronization signal to the at least one slave chip, and
      initiate the first counter, wherein the completion of the alignment of the first plurality of data lanes is determined based on generation of a first inter-lane alignment complete signal by the master chip or based on processing a first alignment character by the master chip; and
      release the first plurality of memories when the first counter reaches a first synchronization window value; and
   the at least one slave chip comprising a second plurality of data lanes, a second plurality of memories, and a second counter that increments at the each clock cycle, wherein the at least one slave chip is operative to:
      align the second plurality of data lanes;
      buffer the second plurality of data lanes into the second plurality of memories upon completion of the alignment of the second plurality of data lanes, wherein the completion of the alignment of the second plurality of data lanes is determined based on generation of a second inter-lane alignment complete signal by the at least one slave chip or based on processing a second alignment character by the at least one slave chip;
      initiate the second counter upon reception of the synchronization signal from the master chip irrespective of whether the alignment of the second plurality of data lanes has completed; and
      release the second plurality of memories when the second counter reaches a second synchronization window value.

Advantageously, the at least one slave chip further comprises a third counter value that increments at the each clock cycle, and the at least one slave chip is further operative to:
initiate the third counter upon the aligning the second plurality of data lanes; and
generate an error signal when the third counter reaches a timeout value prior to the reception of the synchronization signal from the master chip, wherein the timeout value is equivalent to the second synchronization window value.

Advantageously, the master chip further comprises a first register that stores the first synchronization window value and the at least one slave chip further comprises a second register that stores the second synchronization window value, wherein the first synchronization window value is equivalent to the second synchronization window value.

Advantageously, the at least one slave chip is further operative to:
generate an error signal when the second counter reaches the synchronization window value prior to the completion of the alignment of the second plurality of data lanes.

Advantageously, the master chip is on a first printed circuit board and the at least one slave chip is on a second printed circuit board distinct from the first printed circuit board.

Advantageously, the master chip is communicatively coupled to the at least one slave chip by a bidirectional line.

Advantageously, the completion of the alignment of the first plurality of data lanes by the master chip occurs prior to the completion of the alignment of the second plurality of data lanes by the at least one slave chip.

Advantageously, the completion of the alignment of the first plurality of data lanes by the master chip occurs after the completion of the alignment of the second plurality of data lanes by the at least one slave chip.

Advantageously, the master chip comprises a first digital front end chip and the slave chip comprises a second digital front end chip.

According to an aspect, a non-transitory machine-readable medium is provided embodying instructions that, when executed by a machine, allow the machine to perform a method for multichip synchronization, the method comprising:
aligning, by each of a plurality of chips, a plurality of data lanes of each of the plurality of chips, wherein the plurality of chips comprises a master chip and slave chips;
upon completing the aligning by each of the plurality of chips:
   buffering, by each of the plurality of chips, each of the plurality of data lanes of each of the plurality of chips in a plurality of memories of each of the plurality of chips;
      and
   initiating, by each of the plurality of chips, a first counter that increments at each clock cycle;
transmitting, from the master chip of the plurality of chips to the slave chips of the plurality of chips, a synchronization signal upon completing the aligning by the master chip of the plurality of chips;
initiating, by each of the plurality of chips if the first counter of each of the slave chips of the plurality of chips is less than a timeout value when each of the slave chips of the plurality of chips receives the synchronization signal, a second counter that increments at the each clock cycle, otherwise reporting, by one of the plurality of chips, a synchronization error, wherein the second counter of each of the slave chips of the plurality of chips is initiated when the synchronization signal is received by each of the slave chips of the plurality of chips irrespective of whether each of the slave chips of the plurality of chips completed the aligning, and the second counter of the master chip of the plurality of chips is initiated when the synchronization signal is transmitted by the master chip of the plurality of chips; and
releasing, by each of the plurality of chips, the plurality of memories of each of the plurality of chips when the second counter of each of the plurality of chips reaches a synchronization window value of each of the plurality of chips if all of the slave chips of the plurality of chips have completed the aligning, otherwise reporting, by one of the plurality of chips, the synchronization error.

Advantageously, the completing the aligning by each of the plurality of chips is determined based on an alignment complete signal generated by each of the plurality of chips or based on processing an alignment character by each of the plurality of chips.

Advantageously, the method further comprises:
resetting, by each of the plurality of chips, the first counter and the second counter of each of the plurality of chips when the synchronization error is reported.

Advantageously, the master chip of the plurality of chips completes the aligning prior to at least one of the slave chips of the plurality of chips.

### BRIEF DESCRIPTION OF THE DRAWINGS

Certain features of the subject technology are set forth in the appended claims. However, for purpose of explanation, several embodiments of the subject technology are set forth in the following figures.

FIG. 1 illustrates an example wireless system that may implement a multichip synchronization system.

FIG. 2 illustrates an example wireless system including at least one digital front end chip.

FIG. 3 illustrates an example multichip synchronization system.

FIG. 4 illustrates an example multichip synchronization system.

FIG. 5 illustrates a flow diagram of an example process for a multichip synchronization system.

FIG. 6 illustrates a flow diagram of an example process for a master chip in a multichip synchronization system.

FIG. 7 illustrates a flow diagram of an example process for a slave chip in a multichip synchronization system.

FIG. 8 illustrates an exemplary multi-frame structure.

FIG. 9 illustrates exemplary FIFO memory processing timelines in a multichip synchronization system.

FIG. 10 conceptually illustrates an electronic system with which some implementations of the subject technology may be implemented.

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology. However, it will be clear and apparent to those skilled in the art that the subject technology is not limited to the specific details set forth herein and may be practiced without these specific details. In some instances, well-known structures and components are shown in block diagram form in order to avoid obscuring the concepts of the subject technology.

In the subject multichip synchronization system, multiple DFE chips may be interconnected, such as by a single bidirectional line. The DFE chips may each include multiple aligned data lanes, and each DFE chip may include a first-in-first-out (FIFO) memory corresponding to each data lane. Thus, a DFE chip that includes multiple data lanes may include multiple FIFO memories, e.g. one FIFO memory corresponding to each data lane. The system may designate one of the DFE chips as a "master" chip and the remaining DFE chips as "slave" chips. In one example, the master chip may be selected at random. Alternatively, or in addition, the master chip may be predefined by a user, and/or the master chip may be fixed. If the master DFE chip is fixed, e.g. the same DFE chip is always designated as the master DFE chip, the DFE chips may be interconnected by a single unidirectional line or a single bidirectional line.

In operation, the DFE chips may each process and align their individual data lanes in the same fashion that the data lanes are aligned in a single DFE chip system. However, as each DFE chip completes its inter-lane alignment, such as when a DFE chip generates an inter-lane alignment complete signal, each DFE chip begins buffering data from each data lane into the FIFO memory corresponding to each data lane, such as by holding the read pointers corresponding to the FIFO memories. For example, a DFE chip may buffer data in the FIFO memories by writing data into the FIFO memories without reading any data out of the FIFO memories. Since the digital signals processed by the DFE chips may not be aligned, each DFE chip may complete its inter-lane alignment, and begin buffering its data lanes into the FIFO memories, at different times. In addition, as each DFE chip completes its inter-lane alignment, the DFE chip starts a timeout counter that increments by one at each clock cycle. Alternatively, other triggers may be used to initiate the buffering of data into the FIFO memories by each DFE chip, such as when certain control characters are decoded by each DFE chip after the inter-lane alignment complete signal is generated.

Once the DFE chip designated as the master DFE chip completes its inter-lane alignment, such as when the master DFE chip generates an inter-lane alignment complete signal, the master DFE chip generates a synchronization signal, in addition to buffering data into its FIFO memories and starting its timeout counter. The synchronization signal is transmitted to each of the slave DFE chips, such as over the line connecting the DFE chips. As each slave DFE chip receives the synchronization signal, each slave DFE chip may start a FIFO release counter that increments by one at each clock cycle, and any slave DFE chips that have started their timeout counter may reset their timeout counter. However, if the timeout counter of any of the slave DFE chips reaches a timeout value before the slave DFE chip receives the synchronization signal from the master DFE chip, a synchronization error is reported and all of the counters of all of the DFE chips are reset. The master DFE chip may not need to start a FIFO release counter, since the master DFE chip's timeout counter may also function as its FIFO release counter. Alternatively or in addition, the master DFE chip may start a FIFO release counter upon generating the synchronization signal.

The DFE chips may continue buffering data into the FIFO memories and incrementing the FIFO release counters at each clock cycle. The DFE chips may each store a synchronization window value, such as thirty-two, that is equivalent across each of the DFE chips, such as in a register on each of the DFE chips. Alternatively, or in addition, the synchronization window value may differ for each DFE chip to account for delays in transmitting signals between the DFE chips, such as trace delay, or generally any transmission delays. Upon the FIFO release counters reaching the stored synchronization window value, each of the DFE chips releases their FIFO memories substantially in unison, such as by releasing the read pointers, thereby synchronizing the outputs of each of the DFE chips. However, if any of the slave DFE chips has not completed its inter-lane alignment prior to its FIFO release counter reaching the synchronization window value, a synchronization error is reported and all of the counters of all of the DFE chips are reset. In one example, the synchronization window value may be equivalent to the timeout value.

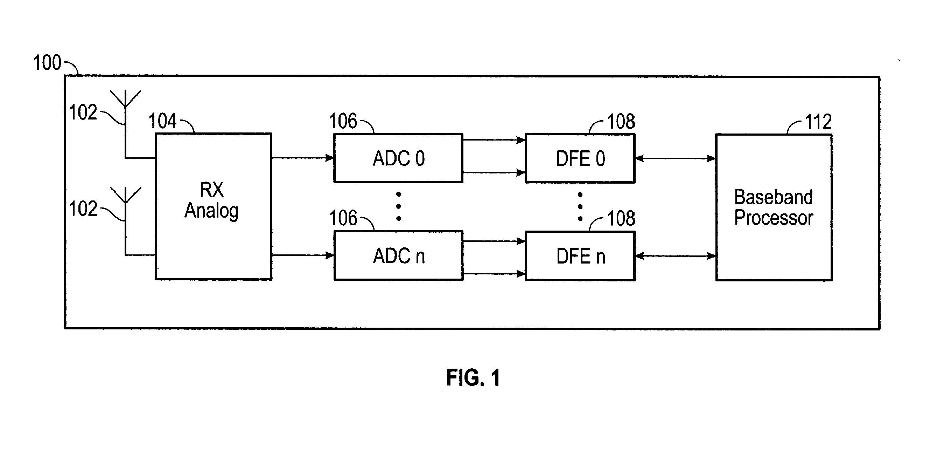

FIG. 1 illustrates an example wireless system 100 that may implement a multichip synchronization system. Not all of the depicted components may be required, however, and some implementations may include additional components not shown in the figure. Variations in the arrangement and type of the components may be made without departing from the spirit or scope of the claims as set forth herein. Additional, different or fewer components may be provided.

Wireless system 100 includes one or more antennas 102, an analog receiver 104, one or more analog to digital converters (ADC) 106, one or more digital front end (DFE) chips 108, and a baseband processor 112. Antennas 102 are communicatively coupled to analog receiver 104, which is communicatively coupled to ADCs 106, which are communicatively coupled to DFEs 108, which are communicatively coupled to baseband processor 112. In one example, wireless system 100 may include a dedicated ADC 106 and a dedicated DFE 108 for each antenna 102.

In operation, analog signals received by the antennas 102 are provided by the analog receiver 104 to the ADCs 106. The ADCs 106 convert the analog signals into digital data streams and may provide the data streams to the DFE chips 108. The ADCs 106 may multiplex the data across multiple data lanes and may utilize a serializer/deserializer (SerDes) to transmit the data streams over a serial interface to the DFE chips 108. The serial interface may be any interface capable of supporting multiple data lanes, such as a serial interface that is compliant with the JESD204A standard of the Joint Electron Devices Engineering Council (JEDEC).

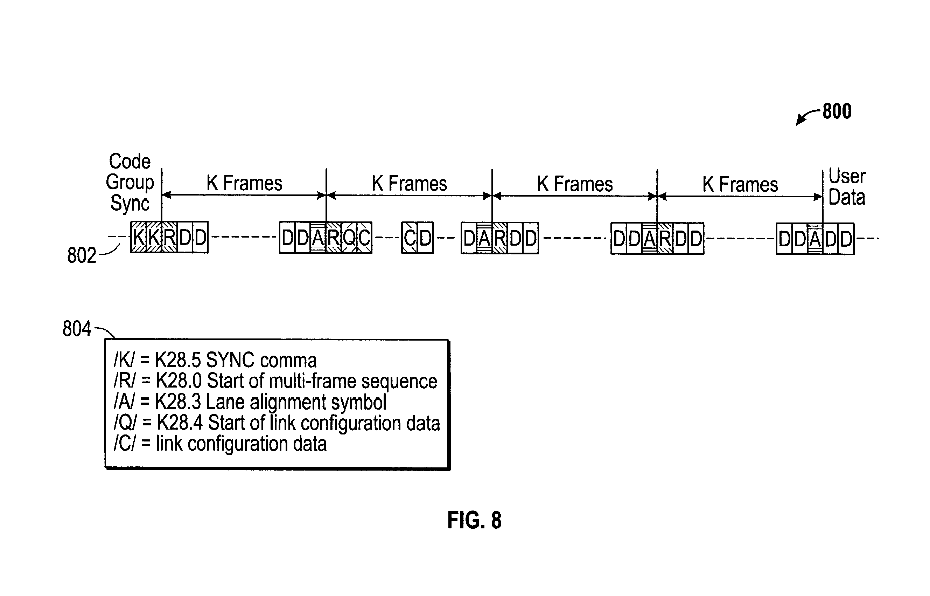

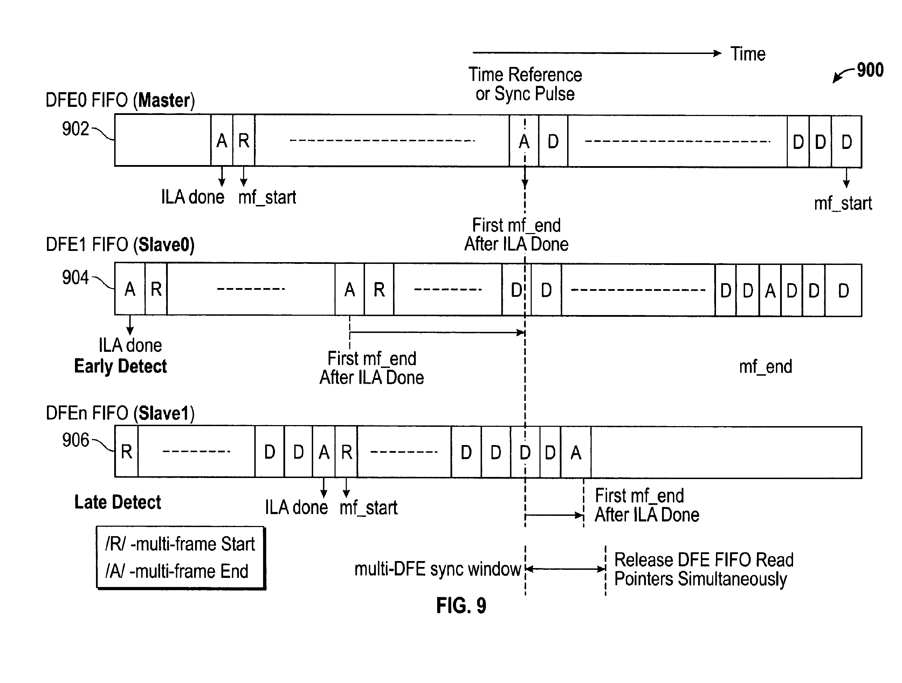

The DFE chips 108 may each utilize a SerDes to convert the received serial data streams into parallel data streams on a per lane basis. The DFE chips 108 may decode the data streams, such as by using an 8B/10B decoder. Each DFE chip 108 may then perform inter-lane alignment on its data lanes or deskew its data lanes, such as to remove lane-to-lane skew introduced by e.g., printed circuit board (PCB) traces, chip packaging, etc. For example, each DFE chip 108 may process various characters, or symbols, in the decoded data streams to facilitate the inter-lane alignment process. In one instance, each DFE chip 108 may extract inter-lane alignment multi-frames from the incoming data stream on each of the lanes. The start of an inter-lane alignment multi-frame may be identified by a starting symbol, such as a "/K28.0/" symbol for a JESD204A compliant serial interface, which also may be referred to as an "R" character, and the end of an inter-lane alignment multi-frame may be identified by an ending symbol, such as a "/K28.3/" symbol for a JESD204A compliant serial interface, which also may be referred to as an "A" character. The ending symbol, such as the "A" character, may be used to perform the inter-lane alignment, e.g. to remove any lane-to-lane skew. The decoded characters or symbols used to facilitate the inter-lane alignment process in the example of a JESD204A compliant serial interface are discussed in more detail in Figs. 8 and 9 below.

Upon completing inter-lane alignment, each DFE chip 108 may generate an inter-lane alignment done signal, which may be referred to as an "ILA done" signal or an "ILA_done" signal. The ILA done signal may be used as a reference for each DFE chip 108 to start the multichip synchronization, which is discussed further below. Upon completing multichip synchronization, the DFE chips 108 may output their data streams substantially in unison to the baseband processor 112 for further processing.

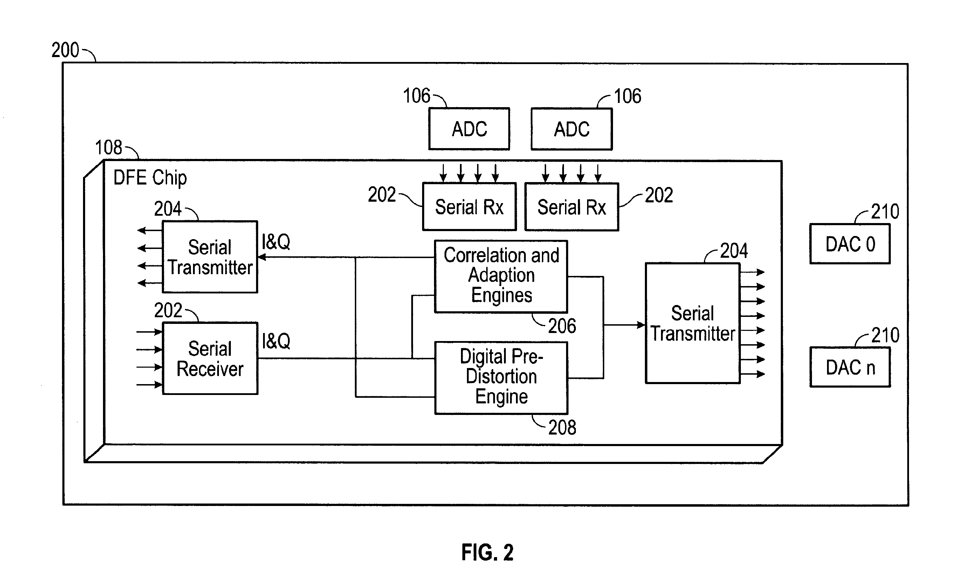

FIG. 2 illustrates an example wireless system 200 including at least one digital front end (DFE) chip 108. Not all of the depicted components may be required, however, and some implementations may include additional components not shown in the figure. Variations in the arrangement and type of the components may be made without departing from the spirit or scope of the claims as set forth herein. Additional, different or fewer components may be provided.

The wireless system 200 includes ADCs 106, DFE chip 108, and digital to analog converters (DACs) 210. The DFE chip 108 includes serial receivers 202, serial transmitters 204, correlation and adaptation engines 206, and digital pre-distortion engine 208. The serial receivers 202 and the serial transmitters may support multiple data lanes. In one example, the serial receivers 202 and the serial transmitters 204 may operate in accordance with the JESD204A standard of the JEDEC.

In operation, the serial receivers 202 may receive data streams from the ADCs 106. If the data streams include multiple data lanes, the data lanes may be aligned by performing inter-lane alignment. Upon completing the inter-lane alignment, the DFE chip 108 may generate an inter-lane alignment done signal, which may be referred to as an "ILA done" signal or an "ILA done" signal. If the wireless system 200 includes multiple DFE chips 108, then each DFE chip 108 may initiate multichip synchronization upon completing its inter-lane alignment, which is discussed further below. The DFE chip 108 may also process the data streams, such as by performing correlation or adaption by the correlation and adaption engines 206, and/or by performing digital pre-distortion by the digital pre-distortion engine 208. The DFE chip 108 may also output the data streams using serial transmitters 204, such as to DACs 210.

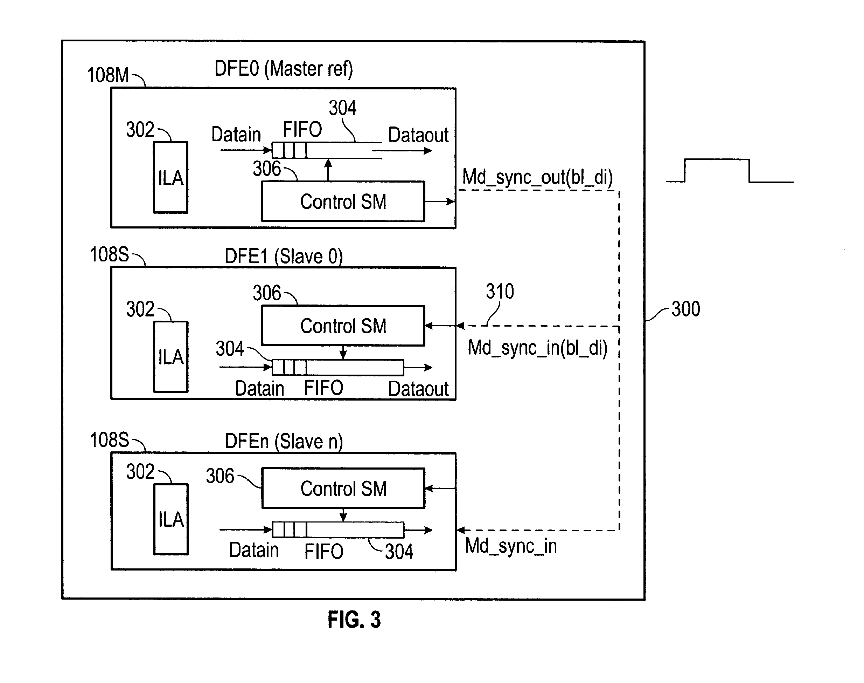

FIG. 3 illustrates an example multichip synchronization system 300. Not all of the depicted components may be required, however, and some implementations may include additional components not shown in the figure. Variations in the arrangement and type of the components may be made without departing from the spirit or scope of the claims as set forth herein. Additional, different or fewer components may be provided.

The multichip synchronization system 300 includes one master DFE chip 108M, one or more slave DFE chips 108S, and a line 310 that couples the master DFE chip 108M and slave DFE chips 108S, such as a bidirectional line between the master DFE chip 108M and the slave DFE chips 108S, or a unidirectional line from the master DFE chip 108M to the slave DFE chips 108S. The master DFE chip 108M may be selected at random each time the system 300 is initialized or the master DFE chip 108M may be fixed. In the instance that the master DFE chip 108M is selected at random, the line 310 is a bidirectional line. However, in the instance that the master DFE chip 108M is fixed, the line 310 may be a bidirectional line or a unidirectional line.

The DFE chips 108M, 108S may each include an inter-lane-alignment mechanism 302, one or more first-in-first-out (FIFO) memories 304, or FIFO logic, and a control state machine 306. In one example, the depth of the FIFO memories 304 may be sixty-four. In addition, each of the DFE chips 108M, 108S may include two types of internal multi-device binary counters that increment at each clock cycle, e.g. a timeout counter, or a first counter, and a FIFO release counter, or a second counter. Each of the DFE chips 108M, 108S may store a timeout value corresponding to the first counter that is equivalent across all of the DFE chips 108M, 108S, such as in a timeout register, and a synchronization window value corresponding to the second counter that may be equivalent across all of the DFE chips 108M, 108S, such as in a multi-device synchronization time window register. Alternatively, or in addition, the synchronization window value may differ for one or more of the DFE chips 108M, 108S, such as to account for delays in transmitting the synchronization signal from the master DFE chip 108M to the slave DFE chips 108S. In one example, the timeout value may be equivalent to the synchronization window value, such as both values may be thirty-two, in which case the timeout register may not be included. In one example, the first counter, second counter, synchronization time window register and/or timeout register may be part of the control state machine 306. Alternatively, or in addition, the summation of the timeout value and the synchronization window value should be no greater than the depth of the FIFO memories 304. Accordingly, if the timeout value and the synchronization value are equivalent, then the equivalent value should be no greater than one half of the depth of the FIFO memories 304.

In operation, the DFE chips 108M, 108S may receive data streams having multiple lanes, such as from the ADCs 106 of Fig. 1. Each of the DFE chips 108M, 108S may perform inter-lane alignment on the received data streams. The control state machine 306 of each master or slave DFE chip 108M, 108S may determine when each master or slave DFE chip 108M, 108S has completed its inter-lane alignment. For example, a control state machine 306 of a master or slave DFE chip 108M, 108S may determine that the master or slave DFE chip 108M, 108S has completed its inter-lane alignment by processing an ILA done signal generated by the master or slave DFE chip 108M, 108S, or by parsing the end of a character from the incoming data stream that indicates that inter-lane alignment is complete after the ILA done signal has been generated, such as by parsing an inter-lane alignment multi-frame ending character, e.g. an "A" character.

Once the control state machine 306 of a master or slave DFE chip 108M, 108S has determined that inter-lane alignment of the master or slave DFE chip 108M, 108S is complete, the master or slave DFE chip 108M, 108S starts writing data from each data lane into a corresponding FIFO memory 304, starting at the next clock cycle, such as by stalling or freezing FIFO read pointers. The master or slave DFE chip 108M, 108S continues writing data, or buffering data, from the data lanes into the corresponding FIFO memories 304 until multichip synchronization is complete. The control state machine 306 may also initiate the timeout counter, or first counter, that increments with each clock cycle, upon determining that inter-lane alignment is complete. The first counter may count the number of clock cycles that have elapsed since the master or slave DFE chip 108M, 108S completed its inter-lane alignment, such as when the control state machine 306 of the master or slave DFE chip 108M, 108S sampled the ILA done signal or when the control state machine 306 parsed the ending character from the incoming data stream that indicates that inter-lane alignment is complete, such as the "A" character. Since the inter-lane alignment for each of the master or slave DFE chip 108M, 108S may occur at different times, and therefore may be skewed, the master and slave DFE chips 108M, 108S should be synchronized with each other before processing and outputting the data streams, such as to the baseband processor 112 of Fig. 1.

Thus, once the control state machine 306 of the master DFE chip 108M determines that the master DFE chip 108M has completed its inter-lane alignment, the master DFE chip 108M generates a synchronization pulse, or a synchronization signal, e.g. Md_sync_out of Fig. 3, that is transmitted to each of the slave DFE chips 108S via the line 310. In one example, the synchronization signal may be generated by the control state machine 306 of the master DFE chip 108M.

The slave DFE chips 108S may each receive the synchronization signal via the line 310, e.g. MD_sync_in of Fig. 3. Each DFE chip 108M, 108S initiates its FIFO release counter, or second counter, upon transmission of the synchronization signal for the master DFE chip 108M, and upon reception of the synchronization signal for the slave DFE chips 108S. For example, the control state machine 306 of each DFE chip 108M, 108S may initiate the second counter of the DFE chip 108M, 108S. Thus, the second counters of the DFE chips 108M, 108S may be initiated at substantially the same time, such as within one clock cycle, and the second counters of the DFE chips 108M, 108S are subsequently incremented with each clock cycle. However, if the first counter of any of the slave DFE chips 108S reaches the timeout value before the slave DFE chip 108S receives the synchronization signal from the master DFE chip 108M, a synchronization error is reported, e.g. an error indictor may be stored in an error register, and the first and second counters of all of the DFE chips 108M, 108S are reset. For example, the synchronization error may be reported at the system level, such as to system level software, and the system level software may instruct the DFE chips 108M, 108S to reset the first and second counters. In one example, any first counters of the DFE chips 108M, 108S that were previously initiated may be reset upon initiating the second counters, e.g. the control state machine 306 of each of the DFE chip 108M, 108S may reset the first counters.

The second counter of each DFE chip 108M, 108S may continue incrementing at each clock cycle and each DFE chip 108M, 108S may either continue performing inter-lane alignment, or continue buffering the data lanes into the FIFO memories 304 if inter-lane alignment has been completed. Once the second counter of each of the DFE chips 108M, 108S reaches the synchronization window value, each of the DFE chips 108M, 108S releases its FIFO read pointers, thereby causing data to be read out of the FIFO memories 304. For example, the control state machine 306 of each of the DFE chips 108M, 108S may release the FIFO read pointers of the FIFO memories 304. Since the DFE chips 108M, 108S release their FIFO read pointers at substantially the same time, such as within one clock cycle, the DFE chips 108M, 108S will be substantially time synchronized upon releasing the FIFO read pointers. However, if any of the slave DFE chips 108S has not completed its inter-lane alignment prior to its second counter reaching the synchronization window value, a synchronization error is reported, e.g. an error indictor may be stored in an error register, and the first and second counters of all of the DFE chips 108M, 108S are reset. For example, the synchronization error may be reported at the system level, such as to system level software, and the system level software may instruct the DFE chips 108M, 108S to reset the first and second counters.

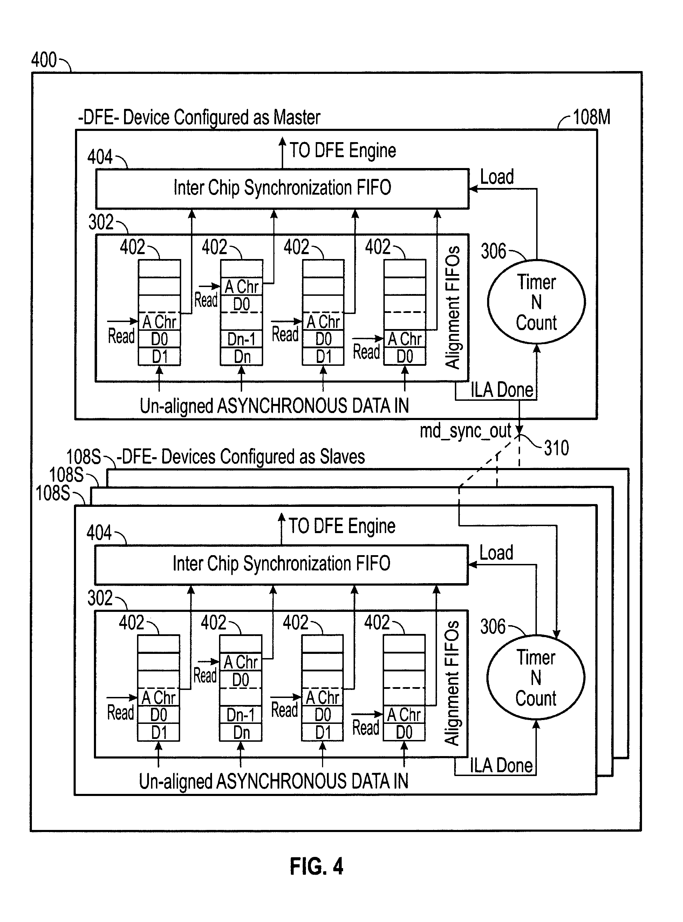

FIG. 4 illustrates an example multichip synchronization system 400. Not all of the depicted components may be required, however, and some implementations may include additional components not shown in the figure. Variations in the arrangement and type of the components may be made without departing from the spirit or scope of the claims as set forth herein. Additional, different or fewer components may be provided.

The multichip synchronization system 400 may include one master DFE chip 108M, one or more slave DFE chips 108S, and a line 310 that communicatively couples the master DFE chip 108M and slave DFE chips 108S, such as a bidirectional line between the master DFE chip 108M and the slave DFE chips 108S, or a unidirectional line from the master DFE chip 108M to the slave DFE chips 108S.

The DFE chips 108M, 108S may each include an inter-lane alignment mechanism 302, a control state machine 306, and an inter-chip synchronization FIFO logic 404. The inter-lane alignment mechanism 302 may include FIFO memories 402 corresponding to each of the data lanes that may be used to perform inter-lane alignment. The inter-chip synchronization FIFO logic 404 may include FIFO memories corresponding to each of the data lanes that may be used to perform multichip synchronization, such as the FIFO memories 304 of Fig. 3. In one example, the depth of the FIFO memories 402 of the inter-lane alignment mechanism 302 and/or the depth of the FIFO memories of the inter-chip synchronization FIFO logic 404 may be sixty-four.

The control state machine 306 may include two types of internal multi-device binary counters that increment at each clock cycle, e.g. a timeout counter, or a first counter, and a FIFO release counter, or a second counter. In Fig. 4, the first counter may be represented by "Timer" and the second counter may be represented by "count." Each of the DFE chips 108M, 108S may also store a timeout value for the first counter, such as in a timeout register, and a synchronization window value corresponding to the second counter, such as in a multi-device synchronization time window register. The timeout values and synchronization window values may be equivalent across each of the DFE chips 108M, 108S, or the timeout values and synchronization window values may differ for one or more DFE chips 108M, 108S, such as to account for delay, e.g. trace delay, that may occur when the synchronization signal is transmitted from the master DFE chip 108M to the slave DFE chips 108S. In one example, the timeout value may be equivalent to the synchronization window value, in which case the timeout register may not be included, e.g. in Fig. 4 the multi-device synchronization time window register may be represented by "N" and the timeout register may not be included. In one example, the timeout value and the synchronization window value may both be thirty-two. Alternatively, or in addition, the summation of the timeout value and the synchronization window value may be limited to the depth of the FIFO memories 402 of the inter-lane alignment mechanism 302 and/or the depth of the FIFO memories of the inter-chip synchronization FIFO logic 404.

In operation, the inter-lane alignment mechanisms 302 of DFE chips 108M, 108S may perform inter-lane alignment using FIFO memories 402. The control state machines 306 of each of the DFE chips 108M, 108S, may determine when each of the DFE chips 108M, 108S completes its inter-lane alignment, such as by sampling the ILA done signal generated by the inter-lane alignment mechanism 302, or by parsing a multi-frame alignment character from the incoming data stream after the ILA done signal is generated, such as the "A" character. The control state machines 306 of each of the DFE chips 108M, 108S may instruct the inter-chip synchronization FIFO logic 404 of each of the DFE chips 108M, 108S to start buffering each of the data lanes, such as by freezing the FIFO read pointers, upon determining that the inter-lane alignment mechanism 302 has completed inter-lane alignment. The control state machines 306 of the DFE chips 108M, 108S may also initiate the first counter that increments with each clock cycle upon determining that inter-lane alignment is complete.

Once the control state machine 306 of the master DFE chip 108M determines that the master DFE chip 108M has completed its inter-lane alignment, the control state machine 306 may generate the synchronization signal and transmit the synchronization signal to the slave DFE chips 108S, such as over line 310. The control state machine 306 of the master DFE chip 108M initiates the second counter upon transmission of the synchronization signal, and the control state machine 306 of each slave DFE chip 108S initiates the second counter upon reception of the synchronization signal. Thus, the second counters of each of the DFE chips 108M, 108S will be initiated at substantially the same time, such as within one clock cycle. However, if the first counter of any of the slave DFE chips 108S reaches the timeout value before the slave DFE chip 108S receives the synchronization signal from the master DFE chip 108M, a synchronization error is reported by the slave DFE chip 108S, e.g. an error indictor may be stored in an error register, and the first and second counters of all of the DFE chips 108M, 108S are reset. For example, the synchronization error may be reported at the system level, such as to system level software, and the system level software may instruct the DFE chips 108M, 108S to reset the first and second counters.

The second counters of the DFE chips 108M, 108S may continue incrementing at each clock cycle, and the DFE chips 108M, 108S may either continue performing inter-lane alignment, or continue buffering the data lanes into the inter-chip synchronization FIFO logic 404 if inter-lane alignment is complete. Once the second counters of each of the DFE chips 108M, 108S reaches the synchronization window value, the control state machine 306 of each of the DFE chips 108M, 108S instructs the inter-chip synchronization FIFO logic 404 to release its FIFO read pointers, thereby causing data to be read out of the inter-chip synchronization FIFO logic. Since the DFE chips 108M, 108S release their FIFO read pointers at substantially the same time, such as within one clock cycle, the DFE chips 108M, 108S will be substantially time synchronized upon releasing the FIFO read pointers. However, if any of the slave DFE chips 108S has not completed its inter-lane alignment prior to the second counter reaching the synchronization window value, a synchronization error is reported by the slave DFE chip 108S, e.g. an error indictor may be stored in an error register, and the first and second counters of all of the DFE chips 108M, 108S are reset. For example, the synchronization error may be reported at the system level, such as to system level software, and the system level software may instruct the DFE chips 108M, 108S to reset the first and second counters.

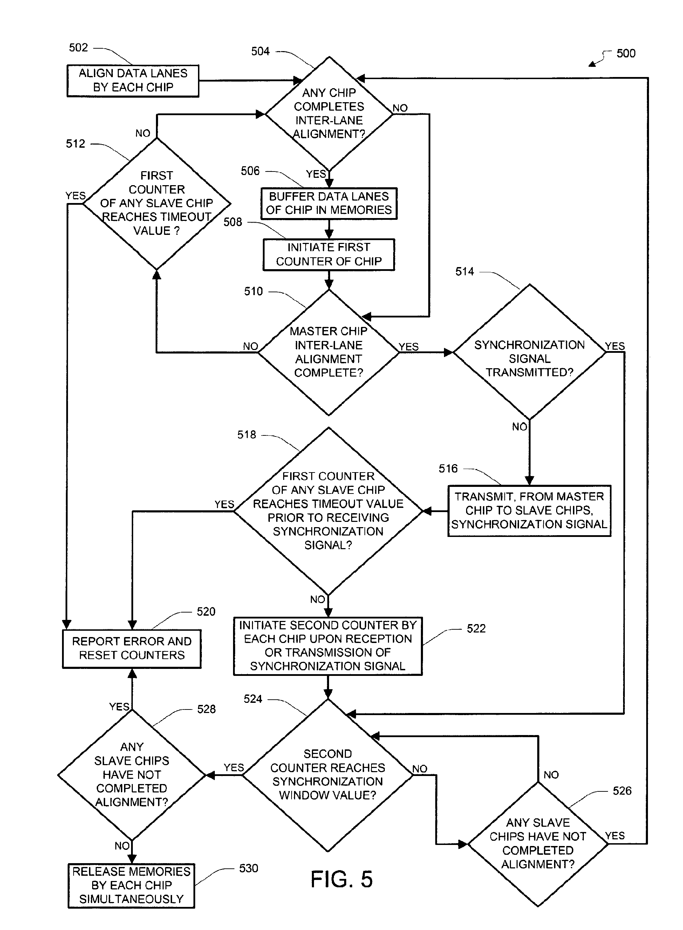

FIG. 5 illustrates a flow diagram of an example process 500 for a multichip synchronization system. For explanatory purposes, example process 500 is described herein with reference to example wireless systems 100, 200 of Figs. 1 and 2 and example multichip synchronization systems 300, 400 of Figs. 3 and 4; however, example process 500 is not limited to example wireless systems 100, 200 of Figs. 1 and 2, or example multichip synchronization systems 300, 400 of Figs. 3 and 4. Further for explanatory purposes, the blocks of example process 500 are described herein as occurring in serial, or linearly. However, multiple blocks of example process 500 may occur in parallel, such as in parallel within the same DFE chip 108M, 108S and/or in parallel across multiple DFE chips 108M, 108S.

In block 502, each of the DFE chips 108M, 108S performs inter-lane alignment on its data lanes. For example, the inter-lane alignment mechanisms 302 of the DFE chips 108M, 108S may perform inter-lane alignment on the data lanes. In block 504, the control state machine 306 of each DFE chip 108M, 108S determines whether the DFE chip 108M, 108S has completed inter-lane alignment. For example, the control state machine 306 of each DFE chip 108M, 108S may determine whether the DFE chip 108M, 108S has generated a signal indicating that the inter-lane alignment is complete, such as an ILA done signal. Alternatively, the control state machine 306 of each DFE chip 108M, 108S may determine whether the DFE chip 108M, 108S has parsed a particular character in the incoming data stream after the ILA done signal has been generated, such as an "A" character.

If, in block 504, any of the DFE chips 108M, 108S has completed inter-lane alignment, the process 500 moves to block 506. In block 506, the DFE chips 108M, 108S that have completed inter-lane alignment start buffering their data lanes into their FIFO memories 304, if they are not already doing so. In block 508, the DFE chips 108M, 108S that have completed inter-lane alignment initiate their first counter, if they have not already done so. The first counter of each of the DFE chips 108M, 108S may increment at each clock cycle. If, in block 504, none of the DFE chips 108M, 108S has completed inter-lane alignment, the process 500 moves to block 510. In block 510, if the master DFE chip 108M has not completed its inter-lane alignment, the process 500 moves to block 512. In block 512, if the first counter of any of the slave DFE chips 108S has reached the timeout value, the process 500 moves to block 520. In block 520, an error is reported and the counters of all of the DFE chips 108M, 108S are reset, since the first counter of one of the slave DFE chips 108S reached the timeout value before the synchronization signal was received. For example, an error may be reported at the system level, such as to system level software. In this example, the system level software may determine that the inter-chip synchronization was not successful, based at least in part on the reported error, and may instruct the DFE chips 108M, 108S to reset their counters.

If, in block 512, none of the first counters of the slave DFE chips 108S has reached the timeout value, the process 500 returns to block 504. If, in block 510, the master DFE chip 108M has completed its inter-lane alignment, the process 500 moves to block 514. In block 514, if the master DFE chip 108M has not transmitted the synchronization signal, the process 500 moves to block 516. In block 516, the master DFE chip 108M transmits the synchronization signal to the slave DFE chips 108S, such as over the line 310. In block 518, if the first counter of a slave DFE chip 108S reaches the timeout value prior to the slave DFE chip 108S receiving the synchronization signal, the process 500 moves to block 520. In block 520, an error is reported and the counters of all of the DFE chips 108M, 108S are reset, since the first counter of one of the slave DFE chips 108S reached the timeout value before the slave DFE chip 108S received the synchronization signal. For example, an error may be reported at the system level, such as to system level software. In this example, the system level software may determine that the inter-chip synchronization was not successful, based at least in part on the reported error, and may instruct the DFE chips 108M, 108S to reset their counters.

If, in block 518, none of the first counters of the slave DFE chips 108S reached the timeout value prior to slave DFE chips 108S receiving the synchronization signal, the process 500 moves to block 522. In block 522, each of the DFE chips 108M, 108S initiates a second counter that increments at each clock cycle, irrespective of whether each of the DFE chips 108M, 108S has completed its inter-lane alignment. The master DFE chip 108M initiates the second counter upon transmitting the synchronization signal, and the slave DFE chips 108S initiate the second counter upon receiving the synchronization signal. Thus, the second counter of each of the DFE chips 108M, 108S is initiated at substantially the same time, such as within one clock cycle. If, in block 514, the master DFE chip 108M has previously transmitted the synchronization signal, the process 500 moves to block 524.

If, in block 524, the second counter of each of the DFE chips 108M, 108S reaches the synchronization window value, the process 500 moves to block 528. If, in block 528, any of the slave DFE chips 108S has not completed its inter-lane alignment, the process 500 moves to block 520. In block 520, an error is reported and the first and second counters of all of the DFE chips 108M, 108S are reset, since one of the slave DFE chips 108S did not complete its inter-lane alignment prior to its second counter reaching the synchronization window value. For example, an error may be reported at the system level, such as to system level software. In this example, the system level software may determine that the inter-chip synchronization was not successful, based at least in part on the reported error, and may instruct the DFE chips 108M, 108S to reset their counters.

If, in block 528, all of the slave DFE chips 108S have completed their inter-lane alignment, the process 500 moves to block 530. In block 530, each of the DFE chips 108M, 108S releases their FIFO memories 304 at substantially the same time, such as by releasing the FIFO read pointers. Since the FIFO read pointers of each of the DFE chips 108M, 108S are released at substantially the same time, such as within one clock cycle, the DFE chips 108M, 108S will be substantially time synchronized upon releasing the FIFO read pointers. If, in block 524, the second counter has not reached the synchronization window value, the process 500 moves to block 526. If, in block 526, any of the slave DFE chips 108S have not completed inter-lane alignment, the process 500 returns to block 504. If, in block 526, all of the slave DFE chips 108S have completed inter-lane alignment, the process 500 returns to block 524 and waits for the second counter to reach the synchronization window value.

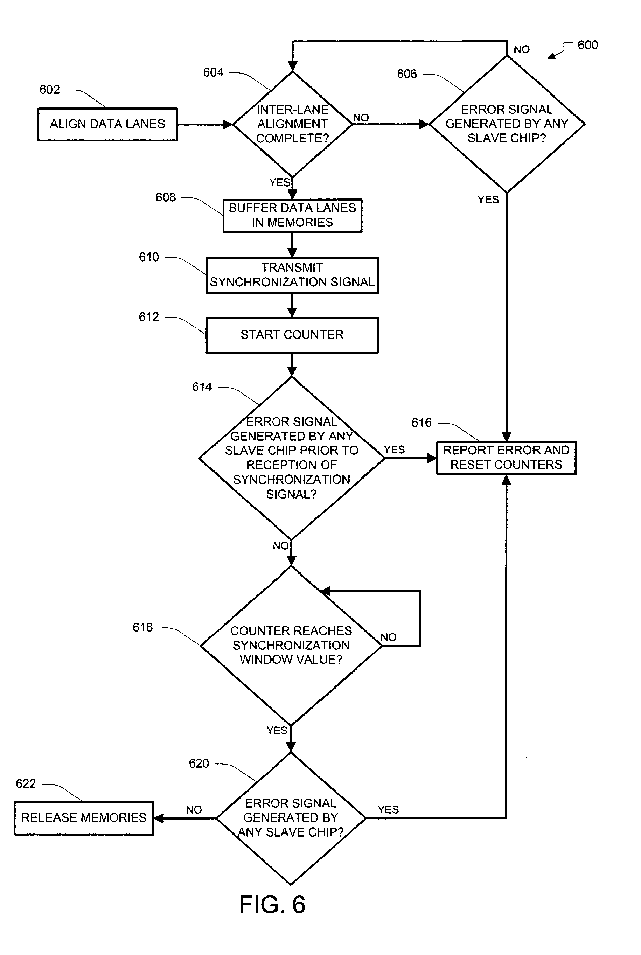

FIG. 6 illustrates a flow diagram of an example process 600 for a master chip in a multichip synchronization system, such as a master DFE chip 108M. For explanatory purposes, example process 600 is described herein with reference to example wireless systems 100, 200 of Figs. 1 and 2 and example multichip synchronization systems 300, 400 of Figs. 3 and 4; however, example process 600 is not limited to example wireless systems 100, 200 of Figs. 1 and 2, or example multichip synchronization systems 300, 400 of Figs. 3 and 4. Further for explanatory purposes, the blocks of example process 600 are described herein as occurring in serial, or linearly. However, multiple blocks of example process 600 may occur in parallel.

In block 602, the master DFE chip 108M performs inter-lane alignment on its data lanes. For example, the inter-lane alignment mechanism 302 of the master DFE chip 108M may perform inter-lane alignment on the data lanes. In block 604, the control state machine 306 the master DFE chip 108M determines whether the master DFE chip 108M has completed inter-lane alignment. For example, the control state machine 306 may determine whether the master DFE chip 108M has generated a signal indicating that inter-lane alignment is complete, such as an ILA done signal. Alternatively, the control state machine 306 may determine whether the master DFE chip 108M has parsed a particular character from the incoming data stream after generating the ILA done signal, such as an "A" character.

If, in block 604, the master DFE chip 108M has not completed inter-lane alignment, the process 600 moves to block 606. If, in block 606, any of the slave DFE chips 108S has generated an error signal or reported a synchronization error, e.g. because the first counter of a slave DFE chip 108S has reached the timeout value prior to the slave DFE chip 108S receiving the synchronization signal, the process 600 moves to block 616. In block 616, the master DFE chip 108M resets all of its counters and reports an error, such as by storing an error indicator in an error register. Alternatively, or in addition, if an error indicator has been previously stored by the slave DFE chip 108S that reported the error, the master DFE chip 108M may only reset its counters in block 616. If, in block 606, none of the slave DFE chips 108S has generated an error signal or reported synchronization error, the process 600 returns to block 604.

Alternatively, or in addition, in block 606, the master DFE chip 108M may be unable to determine whether any of the slave DFE chips 108S has generated an error signal. For example, there may not be a pin for communicating synchronization errors from one DFE chip 108S, 108M to another DFE chip 108S, 108M. In this example, a system, such as system level software, may monitor the status from each slave DFE chip 108S, and may determine whether the inter-chip synchronization has failed, such as when an error signal is generated by one of the slave DFE chips 108S. In this instance, if in block 606 the system level software determines that the inter-chip synchronization has failed, the process 600 moves to block 616. Alternatively, if in block 606 the system level software determines that the inter-chip synchronization has failed, the process 600 returns to block 604.

If, in block 604, the master DFE chip 108M has competed inter-lane alignment, the process 600 moves to block 608. In block 608, the master DFE chip 108M may buffer its data lanes into FIFO memories 304. In block 610, the master DFE chip 108M may transmit a synchronization signal to the slave DFE chips 108S, such as over the line 310. In block 612, the master DFE chip 108M may start a counter, such as the first counter and/or the second counter. In one example, the master DFE chip 108M may only need to initiate one of the counters, since the master DFE chip 108M may complete inter-lane alignment and transmit the synchronization signal at substantially the same time, such as within one clock cycle.

In block 614, if an error signal is generated, or a synchronization error is reported, by any of the slave DFE chips 108S prior to reception of the synchronization signal, the process 600 moves to block 616. In block 616, the master DFE chip 108M resets all of its counters and reports an error, such as by storing an error indicator in an error register. Alternatively, if an error indicator has been previously stored by the slave DFE chip 108S that reported the error, the master DFE chip 108M may only reset its counters in block 616. If, in block 614, none of the slave DFE chips 108S generated an error signal, or reported a synchronization error, prior to reception of the synchronization signal, the process 600 moves to block 618.

Alternatively, or in addition, in block 614 the master DFE chip 108M may be unable to determine whether any of the slave DFE chips 108S has generated an error signal. For example, there may not be a pin for communicating synchronization errors from one DFE chip 108S, 108M to another DFE chip 108S, 108M. In this example, a system, such as system level software, may monitor the status from each slave DFE chip 108S, and may determine whether the inter-chip synchronization has failed, such as when an error signal is generated by one of the slave DFE chips 108S. In this instance, if in block 614 the system level software determines that the inter-chip synchronization has failed, the process 600 moves to block 616. Alternatively, if in block 614 the system level software determines that the inter-chip synchronization has not failed, the process 600 moves to block 618.

If, in block 618, the counter of the master DFE chip 108M has not reached the synchronization window value, the process 600 waits in block 618 until the counter reaches the synchronization window value. If, in block 618, the counter of the master DFE chip 108M has reached the synchronization window value, the process 600 moves to block 620.

If, in block 620, an error signal has been generated, or a synchronization error has been reported, by any of the slave DFE chips 108S, such as by a slave DFE chip 108S that did not complete inter-lane alignment prior to the second counter reaching the synchronization window value, the process 600 moves to block 616. In block 616, the master DFE chip 108M resets all of its counters and reports an error, such as by storing an error indicator in an error register. Alternatively, if an error indicator has been previously stored by the slave DFE chip 108S that reported the error, the master DFE chip 108M may only reset its counters in block 616. If, in block 620, none of the slave DFE chips 108S generated an error signal or reported a synchronization error, the process 600 moves to block 622. In block 622, the master DFE chip 108M releases its FIFO memories 304, such as by releasing its FIFO read pointers. Since the slave DFE chips 108S will also release their FIFO memories 304 at substantially the same time as the master DFE chip 108M, such as within one clock cycle, the DFE chips 108M, 108S will be substantially synchronized upon releasing their read pointers.

Alternatively, or in addition, in block 620, the master DFE chip 108M may be unable to determine whether any of the slave DFE chips 108S has generated an error signal. For example, there may not be a pin for communicating synchronization errors from one DFE chip 108S, 108M to another DFE chip 108S, 108M. In this example, a system, such as system level software, may monitor the status from each slave DFE chip 108S, and may determine whether the inter-chip synchronization was successful. In this instance, if in block 620 the system level software determines that the inter-chip synchronization was successful, the process 600 moves to block 622. Alternatively, if in block 620 the system level software determines that the inter-chip synchronization was not successful, the process 600 moves to block 616.

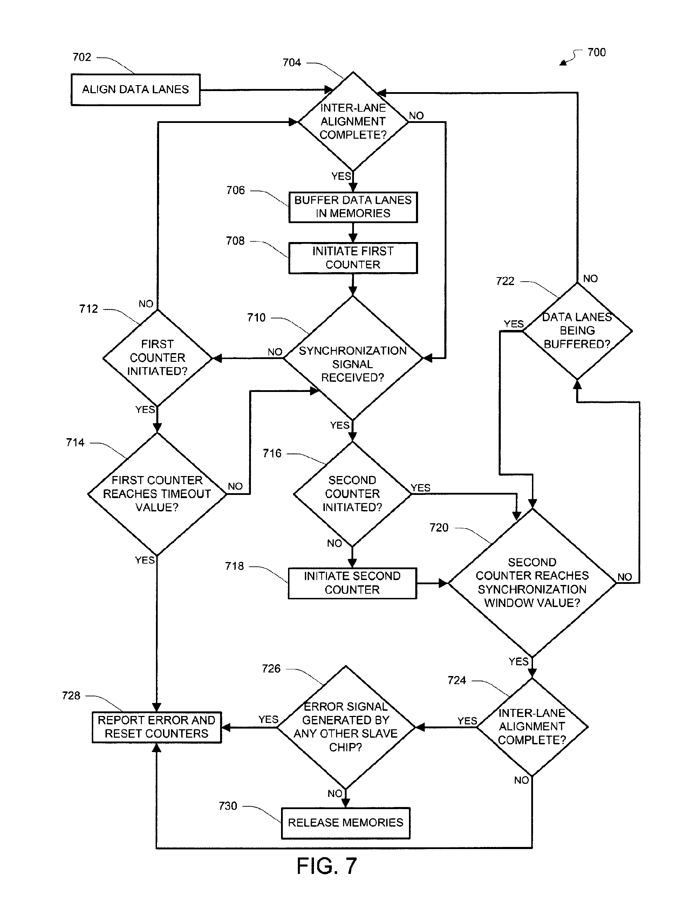

FIG. 7 illustrates a flow diagram of an example process 700 for a slave chip in a multichip synchronization system, such as a slave DFE chip 108S. For explanatory purposes, example process 700 is described herein with reference to example wireless systems 100, 200 of Figs. 1 and 2 and example multichip synchronization systems 300, 400 of Figs. 3 and 4; however, example process 700 is not limited to example wireless systems 100, 200 of Figs. 1 and 2, or example multichip synchronization systems 300, 400 of Figs. 3 and 4. Further for explanatory purposes, the blocks of example process 700 are described herein as occurring in serial, or linearly. However, multiple blocks of example process 700 may occur in parallel, such as in parallel.

In block 702, the slave DFE chip 108S performs inter-lane alignment on its data lanes. For example, the inter-lane alignment mechanism 302 of the slave DFE chip 108S may perform inter-lane alignment on the data lanes. In block 704, the control state machine 306 the slave DFE chip 108S determines whether the slave DFE chip 108S has completed inter-lane alignment. For example, the control state machine 306 may determine whether the slave DFE chip 108S has generated a signal indicating that the inter-lane alignment is complete, such as an ILA done signal. Alternatively, the control state machine 306 may determine whether the slave DFE chip 108S has parsed a particular character from the incoming data stream after generating the ILE done signal, such as an "A" character.

If, in block 704, the control state machine 306 determines that the slave DFE chip 108S has completed its inter-lane alignment, the process 700 moves to block 706. In block 706, the slave DFE chip 108S starts to buffer its data lanes in the FIFO memories 304. In block 708, the slave DFE chip 108S initiates the first counter that continues to increment with each clock cycle. If, in block 710, the slave DFE chip 108S has not received the synchronization signal from the master DFE chip 108M, the process 700 moves to block 712. If, in block 712, the first counter has not been initiated the process 700 returns to block 704. If, in block 712, the first counter has been initiated, the process 700 moves to block 714. If, in block 714, the first counter has reached the timeout value, the process 700 moves to block 728. In block 728, the slave DFE chip 108S resets all of its counters and reports an error, such as by storing an error indicator in an error register. For example, the slave DFE chip 108S may report an error at the system level, such as to system level software. In one instance, the slave DFE chip 108S may not reset its counters until instructed to do so by the system level software. Alternatively, the counters of slave chip 108S may be reset by the system level software.

If, in block 714, the first counter has been initiated but has not reached the timeout value, the process 700 returns to block 710 to determine if the synchronization signal has been received by the slave DFE chip 108S from the master DFE chip 108M. If, in block 710, the synchronization signal has been received by the slave DFE chip 108S from the master DFE chip 108M, the process 700 moves to block 716. In block 716, if the second counter has not been initiated, the process 700 moves to block 718. In block 718, the slave DFE chip 108S initiates the second counter that increments with each clock cycle. If, in block 716, the second counter has been initiated, the process 700 moves to block 720. In block 720, the slave DFE chip 108S determines whether the second counter has reached the synchronization window value. For example, the control state machine 306 of the slave DFE chip 108S may compare the second counter to the synchronization window value. If, in block 720, the slave DFE chip 108S determines that the second counter has not reached the synchronization window value, the process 700 moves to block 722. If, in block 722, the data lanes are not being buffered, e.g. the slave DFE chip 108S has not completed inter-lane alignment, the process 700 returns to block 704. However, if in block 722, the data lanes of the slave DFE chip 108S are being buffered, e.g. the slave DFE chip 108S has completed inter-lane alignment, the process 700 returns to block 720 and waits for the second counter to reach the synchronization window value.

If, in block 720, the slave DFE chip 108S determines that the second counter has reached the synchronization window value, the process 700 moves to block 724. In block 724, the slave DFE chip 108S determines whether inter-lane alignment has been completed. For example, the control state machine 306 of the slave DFE chip 108S may determine whether the inter-lane alignment of the slave DFE chip 108S has been completed. If, in block 724, the slave DFE chip 108S determines that the inter-lane alignment is not complete, the process 700 moves to block 728. In block 728, the slave DFE chip 108S resets all of its counters and reports an error, such as by storing an error indicator in an error register. For example, the slave DFE chip 108S may report an error at the system level, such as to system level software. In one instance, the slave DFE chip 108S may not reset its counters until instructed to do so by the system level software. Alternatively, the counters of slave DFE chip 108S may be reset by the system level software.

If, in block 724, the slave DFE chip 108S determines that the inter-lane alignment is complete, the process 700 moves to block 726. In block 726, the slave DFE chip 108S determines whether any of the other DFE chips 108S, 108M has generated an error signal, such as another slave DFE chip 108S that did not complete its inter-lane alignment prior to its second counter reaching the synchronization window value. If the slave DFE chip 108S determines that another DFE chip 108M, 108s generated an error signal, the process 700 moves to block 728. In block 728, the slave DFE chip 108S resets all of its counters and reports an error, such as by storing an error indicator in an error register. Alternatively, if the slave DFE chip 108S that generated the error signal has already stored an error indicator, the slave DFE chip 108S may only reset its counters in block 728. If, in block 726, none of the other DFE chips 108M, 108S reported an error signal, the process 700 moves to block 730. In block 730, the slave DFE chip 108S releases its FIFO memories 304, such as by releasing its FIFO read pointers. Since the master DFE chip 108M, and any other slave DFE chips 108S, will also release their FIFO memories 304 at substantially the same time as the slave DFE chip 108S, such as within one clock cycle, the DFE chips 108M, 108S will be substantially synchronized upon releasing their FIFO memories 304.

Alternatively, or in addition, in block 726, the slave DFE chip 108S may be unable to determine whether any of the other DFE chips 108S, 108M has generated an error signal. For example, there may not be a pin for communicating synchronization errors from one DFE chip 108S, 108M to another DFE chip 108S, 108M. In this example, a system, such as system level software, may monitor the status from each DFE chip 108S, 108M, and may determine whether the inter-chip synchronization was successful. In this instance, if in block 726 the system level software determines that the inter-chip synchronization was successful, the process 700 moves to block 730. Alternatively, if in block 726 the system level software determines that the inter-chip synchronization was not successful, the process 700 moves to block 728.

FIG. 8 illustrates an exemplary multi-frame structure 800. The multi-frame structure 800 illustrated in Fig. 8 may be used by serial receivers/transmitters, e.g. such as serial receivers/transmitters that implement the JESD204A standard of JEDEC. The "K" character, or "/K28.5/" symbol may represent a synchronization comma. The "R" character, or "/K28.0/" symbol may represent the start of a multi-frame sequence and may be used to initiate inter-lane alignment. The "A" character, or "/K28.3/" symbol, may represent a lane alignment symbol and may be used to indicate the end of an inter-lane alignment multi-frame. The "Q" character, or "/K28.4/" symbol, may represent the start of link configuration data. The "C" character may represent the link configuration data and the "D" character may represent data stream or payload data.

FIG. 9 illustrates exemplary FIFO memory processing timelines 902, 904, 906 in a multichip synchronization system. The FIFO memory processing timelines 902, 904, 906 of Fig. 9 incorporate the multi-frame structure 800 discussed in Fig. 8. The FIFO memory processing timeline 902 corresponds to a master DFE chip 108M and the FIFO memory processing timelines 904, 906 correspond to slave DFE chips 108S. As shown in Fig. 9, the slave DFE chips 108S may complete their inter-lane alignment either before the master DFE chip 108M completes its inter-lane alignment, e.g. FIFO memory processing timeline 904, or after the master DFE chip 108M completes its inter-lane alignment, e.g. FIFO memory processing timeline 906. However, the FIFO memories 304 of the slave DFE chips 108S can be used to absorb the time differences between the completion of the inter-lane alignment of the master DFE chip 108M and the completion of the inter-lane alignment of the slave DFE chips 108S by starting to hold the FIFO read pointers when each slave DFE chip 108S completes its inter-lane alignment, and the releasing the FIFO read pointers after all of the DFE chips 108M, 108S have completed inter-lane alignment and the master DFE chip 108M has transmitted the synchronization signal, such as within a number of clock cycles after the DFE chip 108M has transmitted the synchronization signal.

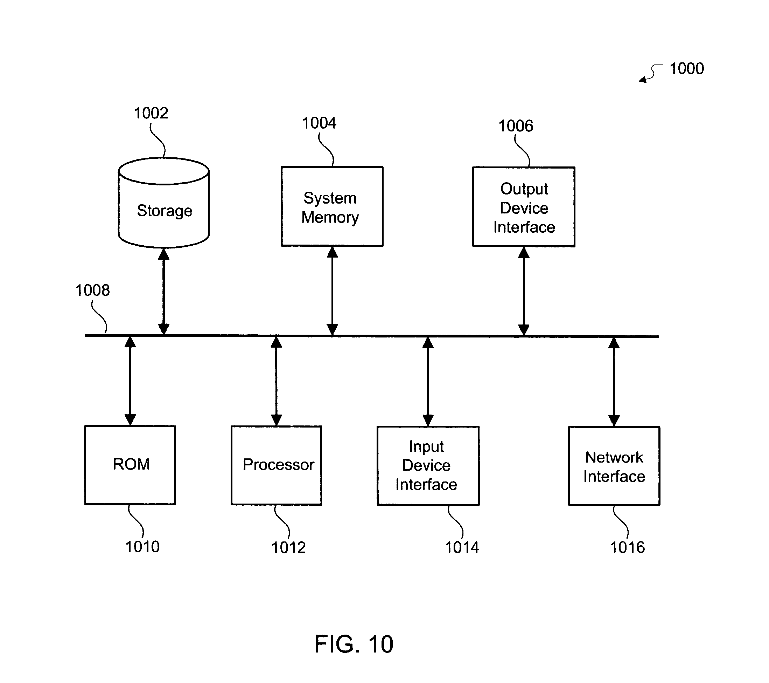

FIG. 10 conceptually illustrates an electronic system with which some implementations of the subject technology are implemented. Electronic system 1000 can be a base station, a receiver, such as a phone, PDA, a tablet computer, or generally any electronic device that transmits or receives analog signals, or any electronic device coupled thereto. Such an electronic system includes various types of computer readable media and interfaces for various other types of computer readable media. Electronic system 1000 includes a bus 1008, processing unit(s) 1012, a system memory 1004, a read-only memory (ROM) 1010, a permanent storage device 1002, an input device interface 1014, an output device interface 1006, and a network interface 1016.

Bus 1008 collectively represents all system, peripheral, and chipset buses that communicatively connect the numerous internal devices of electronic system 1000. For instance, bus 1008 communicatively connects processing unit(s) 1012 with ROM 1010, system memory 1004, and permanent storage device 1002. From these various memory units, processing unit(s) 1012 retrieves instructions to execute and data to process in order to execute the processes of the subject disclosure. The processing unit(s) can be a single processor or a multi-core processor in different implementations.

ROM 1010 stores static data and instructions that are needed by processing unit(s) 1012 and other modules of the electronic system. Permanent storage device 1002, on the other hand, is a read-and-write memory device. This device is a non-volatile memory unit that stores instructions and data even when electronic system 1000 is off. Some implementations of the subject disclosure use a mass-storage device (such as a magnetic or optical disk and its corresponding disk drive) as permanent storage device 1002.

Other implementations use a removable storage device (such as a floppy disk, flash drive, and its corresponding disk drive) as permanent storage device 1002. Like permanent storage device 1002, system memory 1004 is a read-and-write memory device. However, unlike storage device 1002, system memory 1004 is a volatile read-and-write memory, such a random access memory. System memory 1004 stores some of the instructions and data that the processor needs at runtime. In some implementations, the processes of the subject disclosure are stored in system memory 1004, permanent storage device 1002, and/or ROM 1010. For example, the various memory units may include instructions for performing multichip synchronization and/or for monitoring and/or controlling multichip synchronization, such as by system level software. From these various memory units, processing unit(s) 1012 retrieves instructions to execute and data to process in order to execute the processes of some implementations.

Bus 1008 also connects to input and output device interfaces 1014 and 1006. Input device interface 1014 enables the user to communicate information and select commands to the electronic system. Input devices used with input device interface 1014 include, for example, alphanumeric keyboards and pointing devices (also called "cursor control devices"). Output device interfaces 1006 enables, for example, the display of images generated by the electronic system 1000. Output devices used with output device interface 1006 include, for example, printers and display devices, such as cathode ray tubes (CRT) or liquid crystal displays (LCD). Some implementations include devices such as a touchscreen that functions as both input and output devices.

Finally, as shown in FIG. 10, bus 1008 also couples electronic system 1000 to a network (not shown) through a network interface 1016, such as an antenna. In this manner, the computer can be a part of a network of computers (such as a local area network ("LAN"), a wide area network ("WAN"), or an Intranet, or a network of networks, such as the Internet. Any or all components of electronic system 1000 can be used in conjunction with the subject disclosure.

These functions described above can be implemented in digital electronic circuitry, in computer software, firmware or hardware. The techniques can be implemented using one or more computer program products. Programmable processors and computers can be included in or packaged as mobile devices. The processes and logic flows can be performed by one or more programmable processors and by one or more programmable logic circuitry. General and special purpose computing devices and storage devices can be interconnected through communication networks.

Some implementations include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, ultra density optical discs, any other optical or magnetic media, and floppy disks. The computer-readable media can store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some implementations are performed by one or more integrated circuits, such as application specific integrated circuits (ASICs) or field programmable gate arrays (FPGAs). In some implementations, such integrated circuits execute instructions that are stored on the circuit itself.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device. As used in this specification and any claims of this application, the terms "computer readable medium" and "computer readable media" are entirely restricted to tangible, physical objects that store information in a form that is readable by a computer. These terms exclude any wireless signals, wired download signals, and any other ephemeral signals.

To provide for interaction with a user, implementations of the subject matter described in this specification can be implemented on a computer having a display device, such as a CRT (cathode ray tube) or LCD (liquid crystal display) monitor, for displaying information to the user and a keyboard and a pointing device, such as a mouse or a trackball, by which the user can provide input to the computer. Other kinds of devices can be used to provide for interaction with a user as well; for example, feedback provided to the user can be any form of sensory feedback, such as visual feedback, auditory feedback, or tactile feedback; and input from the user can be received in any form, including acoustic, speech, or tactile input.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some implementations, multiple software aspects of the subject disclosure can be implemented as sub-parts of a larger program while remaining distinct software aspects of the subject disclosure. In some implementations, multiple software aspects can also be implemented as separate programs. Finally, any combination of separate programs that together implement a software aspect described here is within the scope of the subject disclosure. In some implementations, the software programs, when installed to operate on one or more electronic systems, define one or more specific machine implementations that execute and perform the operations of the software programs.

A computer program (also known as a program, software, software application, script, or code) can be written in any form of programming language, including compiled or interpreted languages, declarative or procedural languages, and it can be deployed in any form, including as a stand alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Some of the blocks may be performed simultaneously. For example, in certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

The predicate words "configured to", "operable to", and "programmed to" do not imply any particular tangible or intangible modification of a subject, but, rather, are intended to be used interchangeably. For example, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code

A phrase such as an "aspect" does not imply that such aspect is essential to the subject technology or that such aspect applies to all configurations of the subject technology. A disclosure relating to an aspect may apply to all configurations, or one or more configurations. A phrase such as an aspect may refer to one or more aspects and vice versa. A phrase such as a "configuration" does not imply that such configuration is essential to the subject technology or that such configuration applies to all configurations of the subject technology. A disclosure relating to a configuration may apply to all configurations, or one or more configurations. A phrase such as a configuration may refer to one or more configurations and vice versa.

The word "example" is used herein to mean "serving as an example or illustration." Any aspect or design described herein as "example" is not necessarily to be construed as preferred or advantageous over other aspects or designs.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for." Furthermore, to the extent that the term "include," "have," or the like is used in the description or the claims, such term is intended to be inclusive in a manner similar to the term "comprise" as "comprise" is interpreted when employed as a transitional word in a claim.

## Claims

1. A method for multichip synchronization, the method comprising:
aligning, by each of a plurality of chips, a plurality of data lanes of each of the plurality of chips, wherein the plurality of chips comprises a master chip and a plurality of slave chips;
upon completing the aligning by each of the plurality of chips:
buffering, by each of the plurality of chips, each of the plurality of data lanes of each of the plurality of chips in a plurality of memories of each of the plurality of chips;
and
initiating, by each of the plurality of chips, a first counter that increments at each clock cycle;
transmitting, from the master chip of the plurality of chips to the plurality of slave chips of the plurality of chips, a synchronization signal upon completing the aligning by the master chip of the plurality of chips;
initiating, by each of the plurality of chips, a second counter that increments at the each clock cycle, wherein the second counter of each of the plurality of slave chips of the plurality of chips is initiated when the synchronization signal is received by each of the plurality of slave chips of the plurality of chips irrespective of whether each of the plurality of slave chips of the plurality of chips completed the aligning, and the second counter of the master chip of the plurality of chips is initiated when the synchronization signal is transmitted by the master chip of the plurality of chips; and
releasing, by each of the plurality of chips, the plurality of memories of each of the plurality of chips when the second counter of each of the plurality of chips reaches a synchronization window value of each of the plurality of chips.

2. The method of claim 1, wherein the completing the aligning by each of the plurality of chips is determined based on an inter-lane alignment complete signal generated by each of the plurality of chips or based on processing an alignment character by each of the plurality of chips.

3. The method of claim 1 or 2, further comprising:
generating an error signal when the first counter of any of the plurality of slave chips of the plurality of chips reaches a timeout value before receiving the synchronization signal from the master chip of the plurality of chips, wherein the timeout value is equivalent to the synchronization window value.

4. The method of any preceding claim, further comprising:
generating an error signal when any of the plurality of slave chips of the plurality of chips has not completed the aligning prior to the second counter reaching the synchronization window value.

5. The method of any preceding claim, wherein the synchronization window value of at least one of the plurality of chips is different than at least one other of the plurality of chips.

6. The method of any preceding claim, wherein the master chip of the plurality of chips completes the aligning prior to at least one of the plurality of slave chips of the plurality of chips.

7. The method of any preceding claim, wherein the master chip of the plurality of chips completes the aligning after at least one of the plurality of slave chips of the plurality of chips.

8. A multichip synchronization system comprising:
a master chip communicatively coupled to at least one slave chip, the master chip comprising a first plurality of data lanes, a first plurality of memories, and a first counter that increments at each clock cycle, wherein the master chip is operative to:
align the first plurality of data lanes;
upon completion of the alignment of the first plurality of data lanes:
buffer the first plurality of data lanes into the first plurality of memories,
transmit a synchronization signal to the at least one slave chip, and
initiate the first counter, wherein the completion of the alignment of the first plurality of data lanes is determined based on generation of a first inter-lane alignment complete signal by the master chip or based on processing a first alignment character by the master chip; and
release the first plurality of memories when the first counter reaches a first synchronization window value; and
the at least one slave chip comprising a second plurality of data lanes, a second plurality of memories, and a second counter that increments at the each clock cycle, wherein the at least one slave chip is operative to:
align the second plurality of data lanes;
buffer the second plurality of data lanes into the second plurality of memories upon completion of the alignment of the second plurality of data lanes, wherein the completion of the alignment of the second plurality of data lanes is determined based on generation of a second inter-lane alignment complete signal by the at least one slave chip or based on processing a second alignment character by the at least one slave chip;
initiate the second counter upon reception of the synchronization signal from the master chip irrespective of whether the alignment of the second plurality of data lanes has completed; and
release the second plurality of memories when the second counter reaches a second synchronization window value.

9. The system of claim 8, wherein the at least one slave chip further comprises a third counter value that increments at the each clock cycle, and the at least one slave chip is further operative to:
initiate the third counter upon the aligning the second plurality of data lanes; and
generate an error signal when the third counter reaches a timeout value prior to the reception of the synchronization signal from the master chip, wherein the timeout value is equivalent to the second synchronization window value.

10. The system of claim 8 or 9, wherein the master chip further comprises a first register that stores the first synchronization window value and the at least one slave chip further comprises a second register that stores the second synchronization window value, wherein the first synchronization window value is equivalent to the second synchronization window value.

11. The system of any of claims 8 to 10, wherein the at least one slave chip is further operative to:
generate an error signal when the second counter reaches the synchronization window value prior to the completion of the alignment of the second plurality of data lanes.

12. The system of any of claims 8 to 11, wherein the master chip is on a first printed circuit board and the at least one slave chip is on a second printed circuit board distinct from the first printed circuit board.

13. The system of any of claims 8 to 12, wherein the master chip is communicatively coupled to the at least one slave chip by a bidirectional line.

14. The system of any of claims 8 to 13, wherein the completion of the alignment of the first plurality of data lanes by the master chip occurs prior to the completion of the alignment of the second plurality of data lanes by the at least one slave chip.

15. A non-transitory machine-readable medium embodying instructions that, when executed by a machine, allow the machine to perform a method for multichip synchronization, the method comprising:
aligning, by each of a plurality of chips, a plurality of data lanes of each of the plurality of chips, wherein the plurality of chips comprises a master chip and slave chips;
upon completing the aligning by each of the plurality of chips:
buffering, by each of the plurality of chips, each of the plurality of data lanes of each of the plurality of chips in a plurality of memories of each of the plurality of chips;
and
initiating, by each of the plurality of chips, a first counter that increments at each clock cycle;
transmitting, from the master chip of the plurality of chips to the slave chips of the plurality of chips, a synchronization signal upon completing the aligning by the master chip of the plurality of chips;
initiating, by each of the plurality of chips if the first counter of each of the slave chips of the plurality of chips is less than a timeout value when each of the slave chips of the plurality of chips receives the synchronization signal, a second counter that increments at the each clock cycle, otherwise reporting, by one of the plurality of chips, a synchronization error, wherein the second counter of each of the slave chips of the plurality of chips is initiated when the synchronization signal is received by each of the slave chips of the plurality of chips irrespective of whether each of the slave chips of the plurality of chips completed the aligning, and the second counter of the master chip of the plurality of chips is initiated when the synchronization signal is transmitted by the master chip of the plurality of chips; and
releasing, by each of the plurality of chips, the plurality of memories of each of the plurality of chips when the second counter of each of the plurality of chips reaches a synchronization window value of each of the plurality of chips if all of the slave chips of the plurality of chips have completed the aligning, otherwise reporting, by one of the plurality of chips, the synchronization error.
